# EUROPEAN PATENT SPECIFICATION

(11) **EP 4 175 228 B1**
(45) Date of publication and mention of the grant of the patent: **13.05.2026**
(21) Application number: 22203787.1
(22) Date of filing: 26.10.2022
(51) Int. Cl.: H04L 45/00, H04L 47/2483, H04L 9/40, H04L 43/026

(54) **ENCRYPTION SEGMENTS FOR SECURITY IN COMMUNICATION NETWORKS**
VERSCHLÜSSELUNGSSEGMENTE FÜR SICHERHEIT IN KOMMUNIKATIONSNETZEN
SEGMENTS DE CRYPTAGE POUR LA SÉCURITÉ DANS DES RÉSEAUX DE COMMUNICATION

(30) Priority: 29.10.2021 US 202117514047
(43) Date of publication of application: 03.05.2023
(73) Proprietor: Nokia Solutions and Networks Oy, 02610 Espoo (FI)
(72) Inventor: BIDGOLI, Hooman, Ottawa, K2T 0E4 (CA)
(74) Representative: Bryers Intellectual Property Ltd

(56) References cited:
- CN-A- 111 817 982
- CN-A- 112 003 870
- CN-A- 112 118 270
- US-B2- 9 930 066

## Description

### TECHNICAL FIELD

Various example embodiments relate generally to communication networks and, more particularly but not exclusively, to supporting security for communications in communication networks.

### BACKGROUND

In communication networks, various communications technologies may be used to support communications. Patent publication CN112118270A refers to VPN flow identification method based on SSL encryption. Patent publication US9930066B2 describes infrastructure level LAN security.

### SUMMARY

The invention is defined in the independent claims. Particular embodiments are set out in the dependent claims.

In at least some example embodiments, an apparatus includes at least one processor and at least one memory including computer program code, wherein the at least one memory and the computer program code are configured, with the at least one processor, to cause the apparatus to at least support, within a network, communication of a packet of an encrypted traffic flow, wherein the packet includes a payload, wherein an encrypted portion of the packet is encrypted based on an encryption protocol, wherein the encrypted portion of the packet includes the payload, wherein the packet includes an encryption header of the encryption protocol on top of the encrypted portion of the packet, wherein the packet includes an encryption segment identifier configured to uniquely identify the encrypted traffic flow within the network. In at least some example embodiments, the encryption segment identifier is configured to identify, on an encrypting node, an encryption segment configured to encrypt the encrypted traffic flow based on a set of encryption resources. In at least some example embodiments, the encryption segment identifier is configured to identify the encrypting node as a source of the encrypted traffic flow. In at least some example embodiments, the set of encryption resources includes an encryption algorithm used to encrypt the encrypted traffic flow and an encryption key used to encrypt the encrypted traffic flow. In at least some example embodiments, the encryption segment identifier is configured to identify an encrypting node that encrypts the encrypted traffic flow. In at least some example embodiments, the encryption segment identifier is configured to identify an encryption segment, on the encrypting node, configured to encrypt the encrypted traffic flow based on a set of encryption resources. In at least some example embodiments, the set of encryption resources includes an encryption algorithm used to encrypt the encrypted traffic flow and an encryption key used to encrypt the encrypted traffic flow. In at least some example embodiments, the encryption segment identifier is configured to identify a set of encryption resources used by an encryption segment to encrypt the encrypted traffic flow. In at least some example embodiments, the set of encryption resources includes an encryption algorithm used to encrypt the encrypted traffic flow and an encryption key used to encrypt the encrypted traffic flow. In at least some example embodiments, the encryption segment identifier is arranged on top of the encryption header of the encryption protocol. In at least some example embodiments, the encrypted traffic flow is an encrypted service or an encrypted tunnel supporting a set of services. In at least some example embodiments, the encrypted traffic flow is a Layer 2.5 flow or a Layer 3 flow. In at least some example embodiments, the encrypted traffic flow is a Multiprotocol Label Switching (MPLS) flow or an Internet Protocol (IP) flow. In at least some example embodiments, the encrypted portion of the packet includes at least one of at least one Multiprotocol Label Switching (MPLS) label or at least one Internet Protocol (IP) header. In at least some example embodiments, the encrypted portion of the packet includes a second encryption segment identifier configured to uniquely identify a second encrypted traffic flow within the network. In at least some example embodiments, the packet includes a transport segment identifier configured to connect an encrypting node that encrypts the encrypted traffic flow to a decrypting node that decrypts the encrypted traffic flow, wherein the transport segment identifier is arranged on top of the encryption segment identifier. In at least some example embodiments, the packet includes at least one communication header arranged on top of the encryption segment identifier. In at least some example embodiments, the at least one communication header includes at least one of a Layer 3 header, a Layer 2.5 header, or a Layer 2 header. In at least some example embodiments, the at least one communication header includes at least one of an Internet Protocol (IP) header, a Multiprotocol Label Switching (MPLS) header, or an Ethernet header. In at least some example embodiments, the packet includes a second encryption segment identifier configured to uniquely identify a second encrypted traffic flow within the network, wherein the second encryption segment identifier is arranged above the encryption segment identifier. In at least some example embodiments, to support communication of the packet, the at least one memory and the computer program code are configured to, with the at least one processor, cause the apparatus to at least determine, by an encrypting node, that the packet belongs to the encrypted traffic flow, identify, by the encrypting node based on the packet, the encryption segment, and generate, by the encrypting node based on the encryption segment identifier, the packet. In at least some example embodiments, to support communication of the packet, the at least one memory and the computer program code are configured to, with the at least one processor, cause the apparatus to at least receive, by a node, the packet, wherein the packet includes at least one communication header arranged on top of the encryption segment identifier and send, by the node toward a destination node based on the at least one communication header, the packet. In at least some example embodiments, to support communication of the packet, the at least one memory and the computer program code are configured to, with the at least one processor, cause the apparatus to at least determine, by a decrypting node based on the encryption segment identifier in the packet, that the packet is to be decrypted, decrypt, by the decrypting node, the encrypted portion of the packet to form a decrypted packet, and send, by the decrypting node, the decrypted packet.

In at least some example embodiments, a computer readable medium includes computer program code configured to cause an apparatus to at least support, within a network, communication of a packet of an encrypted traffic flow, wherein the packet includes a payload, wherein an encrypted portion of the packet is encrypted based on an encryption protocol, wherein the encrypted portion of the packet includes the payload, wherein the packet includes an encryption header of the encryption protocol on top of the encrypted portion of the packet, wherein the packet includes an encryption segment identifier configured to uniquely identify the encrypted traffic flow within the network. In at least some example embodiments, the encryption segment identifier is configured to identify, on an encrypting node, an encryption segment configured to encrypt the encrypted traffic flow based on a set of encryption resources. In at least some example embodiments, the encryption segment identifier is configured to identify the encrypting node as a source of the encrypted traffic flow. In at least some example embodiments, the set of encryption resources includes an encryption algorithm used to encrypt the encrypted traffic flow and an encryption key used to encrypt the encrypted traffic flow. In at least some example embodiments, the encryption segment identifier is configured to identify an encrypting node that encrypts the encrypted traffic flow. In at least some example embodiments, the encryption segment identifier is configured to identify an encryption segment, on the encrypting node, configured to encrypt the encrypted traffic flow based on a set of encryption resources. In at least some example embodiments, the set of encryption resources includes an encryption algorithm used to encrypt the encrypted traffic flow and an encryption key used to encrypt the encrypted traffic flow. In at least some example embodiments, the encryption segment identifier is configured to identify a set of encryption resources used by an encryption segment to encrypt the encrypted traffic flow. In at least some example embodiments, the set of encryption resources includes an encryption algorithm used to encrypt the encrypted traffic flow and an encryption key used to encrypt the encrypted traffic flow. In at least some example embodiments, the encryption segment identifier is arranged on top of the encryption header of the encryption protocol. In at least some example embodiments, the encrypted traffic flow is an encrypted service or an encrypted tunnel supporting a set of services. In at least some example embodiments, the encrypted traffic flow is a Layer 2.5 flow or a Layer 3 flow. In at least some example embodiments, the encrypted traffic flow is a Multiprotocol Label Switching (MPLS) flow or an Internet Protocol (IP) flow. In at least some example embodiments, the encrypted portion of the packet includes at least one of at least one Multiprotocol Label Switching (MPLS) label or at least one Internet Protocol (IP) header. In at least some example embodiments, the encrypted portion of the packet includes a second encryption segment identifier configured to uniquely identify a second encrypted traffic flow within the network. In at least some example embodiments, the packet includes a transport segment identifier configured to connect an encrypting node that encrypts the encrypted traffic flow to a decrypting node that decrypts the encrypted traffic flow, wherein the transport segment identifier is arranged on top of the encryption segment identifier. In at least some example embodiments, the packet includes at least one communication header arranged on top of the encryption segment identifier. In at least some example embodiments, the at least one communication header includes at least one of a Layer 3 header, a Layer 2.5 header, or a Layer 2 header. In at least some example embodiments, the at least one communication header includes at least one of an Internet Protocol (IP) header, a Multiprotocol Label Switching (MPLS) header, or an Ethernet header. In at least some example embodiments, the packet includes a second encryption segment identifier configured to uniquely identify a second encrypted traffic flow within the network, wherein the second encryption segment identifier is arranged above the encryption segment identifier. In at least some example embodiments, to support communication of the packet, the computer program code is configured to cause the apparatus to at least determine, by an encrypting node, that the packet belongs to the encrypted traffic flow, identify, by the encrypting node based on the packet, the encryption segment, and generate, by the encrypting node based on the encryption segment identifier, the packet. In at least some example embodiments, to support communication of the packet, the computer program code is configured to cause the apparatus to at least receive, by a node, the packet, wherein the packet includes at least one communication header arranged on top of the encryption segment identifier and send, by the node toward a destination node based on the at least one communication header, the packet. In at least some example embodiments, to support communication of the packet, the computer program code is configured to cause the apparatus to at least determine, by a decrypting node based on the encryption segment identifier in the packet, that the packet is to be decrypted, decrypt, by the decrypting node, the encrypted portion of the packet to form a decrypted packet, and send, by the decrypting node, the decrypted packet.

In at least some example embodiments, a method includes supporting, within a network, communication of a packet of an encrypted traffic flow, wherein the packet includes a payload, wherein an encrypted portion of the packet is encrypted based on an encryption protocol, wherein the encrypted portion of the packet includes the payload, wherein the packet includes an encryption header of the encryption protocol on top of the encrypted portion of the packet, wherein the packet includes an encryption segment identifier configured to uniquely identify the encrypted traffic flow within the network. In at least some example embodiments, the encryption segment identifier is configured to identify, on an encrypting node, an encryption segment configured to encrypt the encrypted traffic flow based on a set of encryption resources. In at least some example embodiments, the encryption segment identifier is configured to identify the encrypting node as a source of the encrypted traffic flow. In at least some example embodiments, the set of encryption resources includes an encryption algorithm used to encrypt the encrypted traffic flow and an encryption key used to encrypt the encrypted traffic flow. In at least some example embodiments, the encryption segment identifier is configured to identify an encrypting node that encrypts the encrypted traffic flow. In at least some example embodiments, the encryption segment identifier is configured to identify an encryption segment, on the encrypting node, configured to encrypt the encrypted traffic flow based on a set of encryption resources. In at least some example embodiments, the set of encryption resources includes an encryption algorithm used to encrypt the encrypted traffic flow and an encryption key used to encrypt the encrypted traffic flow. In at least some example embodiments, the encryption segment identifier is configured to identify a set of encryption resources used by an encryption segment to encrypt the encrypted traffic flow. In at least some example embodiments, the set of encryption resources includes an encryption algorithm used to encrypt the encrypted traffic flow and an encryption key used to encrypt the encrypted traffic flow. In at least some example embodiments, the encryption segment identifier is arranged on top of the encryption header of the encryption protocol. In at least some example embodiments, the encrypted traffic flow is an encrypted service or an encrypted tunnel supporting a set of services. In at least some example embodiments, the encrypted traffic flow is a Layer 2.5 flow or a Layer 3 flow. In at least some example embodiments, the encrypted traffic flow is a Multiprotocol Label Switching (MPLS) flow or an Internet Protocol (IP) flow. In at least some example embodiments, the encrypted portion of the packet includes at least one of at least one Multiprotocol Label Switching (MPLS) label or at least one Internet Protocol (IP) header. In at least some example embodiments, the encrypted portion of the packet includes a second encryption segment identifier configured to uniquely identify a second encrypted traffic flow within the network. In at least some example embodiments, the packet includes a transport segment identifier configured to connect an encrypting node that encrypts the encrypted traffic flow to a decrypting node that decrypts the encrypted traffic flow, wherein the transport segment identifier is arranged on top of the encryption segment identifier. In at least some example embodiments, the packet includes at least one communication header arranged on top of the encryption segment identifier. In at least some example embodiments, the at least one communication header includes at least one of a Layer 3 header, a Layer 2.5 header, or a Layer 2 header. In at least some example embodiments, the at least one communication header includes at least one of an Internet Protocol (IP) header, a Multiprotocol Label Switching (MPLS) header, or an Ethernet header. In at least some example embodiments, the packet includes a second encryption segment identifier configured to uniquely identify a second encrypted traffic flow within the network, wherein the second encryption segment identifier is arranged above the encryption segment identifier. In at least some example embodiments, supporting communication of the packet includes determining, by an encrypting node, that the packet belongs to the encrypted traffic flow, identifying, by the encrypting node based on the packet, the encryption segment, and generating, by the encrypting node based on the encryption segment identifier, the packet. In at least some example embodiments, supporting communication of the packet includes receiving, by a node, the packet, wherein the packet includes at least one communication header arranged on top of the encryption segment identifier and sending, by the node toward a destination node based on the at least one communication header, the packet. In at least some example embodiments, supporting communication of the packet includes determining, by a decrypting node based on the encryption segment identifier in the packet, that the packet is to be decrypted, decrypting, by the decrypting node, the encrypted portion of the packet to form a decrypted packet, and sending, by the decrypting node, the decrypted packet.

In at least some example embodiments, an apparatus includes means for supporting, within a network, communication of a packet of an encrypted traffic flow, wherein the packet includes a payload, wherein an encrypted portion of the packet is encrypted based on an encryption protocol, wherein the encrypted portion of the packet includes the payload, wherein the packet includes an encryption header of the encryption protocol on top of the encrypted portion of the packet, wherein the packet includes an encryption segment identifier configured to uniquely identify the encrypted traffic flow within the network. In at least some example embodiments, the encryption segment identifier is configured to identify, on an encrypting node, an encryption segment configured to encrypt the encrypted traffic flow based on a set of encryption resources. In at least some example embodiments, the encryption segment identifier is configured to identify the encrypting node as a source of the encrypted traffic flow. In at least some example embodiments, the set of encryption resources includes an encryption algorithm used to encrypt the encrypted traffic flow and an encryption key used to encrypt the encrypted traffic flow. In at least some example embodiments, the encryption segment identifier is configured to identify an encrypting node that encrypts the encrypted traffic flow. In at least some example embodiments, the encryption segment identifier is configured to identify an encryption segment, on the encrypting node, configured to encrypt the encrypted traffic flow based on a set of encryption resources. In at least some example embodiments, the set of encryption resources includes an encryption algorithm used to encrypt the encrypted traffic flow and an encryption key used to encrypt the encrypted traffic flow. In at least some example embodiments, the encryption segment identifier is configured to identify a set of encryption resources used by an encryption segment to encrypt the encrypted traffic flow. In at least some example embodiments, the set of encryption resources includes an encryption algorithm used to encrypt the encrypted traffic flow and an encryption key used to encrypt the encrypted traffic flow. In at least some example embodiments, the encryption segment identifier is arranged on top of the encryption header of the encryption protocol. In at least some example embodiments, the encrypted traffic flow is an encrypted service or an encrypted tunnel supporting a set of services. In at least some example embodiments, the encrypted traffic flow is a Layer 2.5 flow or a Layer 3 flow. In at least some example embodiments, the encrypted traffic flow is a Multiprotocol Label Switching (MPLS) flow or an Internet Protocol (IP) flow. In at least some example embodiments, the encrypted portion of the packet includes at least one of at least one Multiprotocol Label Switching (MPLS) label or at least one Internet Protocol (IP) header. In at least some example embodiments, the encrypted portion of the packet includes a second encryption segment identifier configured to uniquely identify a second encrypted traffic flow within the network. In at least some example embodiments, the packet includes a transport segment identifier configured to connect an encrypting node that encrypts the encrypted traffic flow to a decrypting node that decrypts the encrypted traffic flow, wherein the transport segment identifier is arranged on top of the encryption segment identifier. In at least some example embodiments, the packet includes at least one communication header arranged on top of the encryption segment identifier. In at least some example embodiments, the at least one communication header includes at least one of a Layer 3 header, a Layer 2.5 header, or a Layer 2 header. In at least some example embodiments, the at least one communication header includes at least one of an Internet Protocol (IP) header, a Multiprotocol Label Switching (MPLS) header, or an Ethernet header. In at least some example embodiments, the packet includes a second encryption segment identifier configured to uniquely identify a second encrypted traffic flow within the network, wherein the second encryption segment identifier is arranged above the encryption segment identifier. In at least some example embodiments, the means for supporting communication of the packet includes means for determining, by an encrypting node, that the packet belongs to the encrypted traffic flow, means for identifying, by the encrypting node based on the packet, the encryption segment, and means for generating, by the encrypting node based on the encryption segment identifier, the packet. In at least some example embodiments, the means for supporting communication of the packet includes means for receiving, by a node, the packet, wherein the packet includes at least one communication header arranged on top of the encryption segment identifier and means for sending, by the node toward a destination node based on the at least one communication header, the packet. In at least some example embodiments, the means for supporting communication of the packet includes means for determining, by a decrypting node based on the encryption segment identifier in the packet, that the packet is to be decrypted, means for decrypting, by the decrypting node, the encrypted portion of the packet to form a decrypted packet, and means for sending, by the decrypting node, the decrypted packet.

### BRIEF DESCRIPTION OF THE DRAWINGS

The teachings herein can be readily understood by considering the following detailed description in conjunction with the accompanying drawings, in which:
FIG. 1 depicts an example embodiment of a system configured to support security for communications based on use of encryption segments;
FIG. 2 depicts an example embodiment of a packet format for illustrating application of encryption and authentication to a packet, in a manner for supporting MPLS security based on IEEE 802.1AE, based on an encryption segment;
FIG. 3 depicts an example embodiment of a packet format for illustrating application of encryption and authentication to a packet, in a manner for supporting IP security based on IEEE 802.1AE, based on an encryption segment;
FIG. 4 depicts an example embodiment of an encoding of an encryption segment in a Segment Identifier (SID) for use within a segment routing over IPv6 (SRv6) header;
FIG. 5 depicts an example embodiment of a communication network for illustrating use of encryption segments for uniquely identifying encrypted traffic flows;
FIG. 6 depicts an example embodiment of a method for supporting security for communications; and
FIG. 7 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments for supporting security for communications are presented. Various example embodiments for supporting security for communications may be configured to support security for communications within a network based on use of encryption segments having encryption segment identifiers (SIDs) associated therewith, respectively. The encryption segment that encrypts a traffic flow on an encrypting node to form an encrypted traffic flow includes the various encryption resources used by the encrypting node to encrypt the traffic flow to form the encrypted traffic flow (e.g., one or more encryption algorithms to be applied to the traffic flow to form the encrypted traffic flow, one or more encryption keys to be used by the encryption algorithm(s) to encrypt the traffic flow to form the encrypted traffic flow, or the like, as well as various combinations thereof). The encryption segment that encrypts a traffic flow to form an encrypted traffic flow may be uniquely identified within the network using an encryption SID and, thus, the encryption SID may be configured to uniquely identify various aspects of the encrypted traffic flow within the network (e.g., identification of the encrypted traffic flow within the network, identification of the encrypting node which encrypts the traffic flow to form the encrypted traffic flow, identification of the encryption segment on the encrypting node which encrypts the traffic flow to form the encrypted traffic flow, identification of encryption resources used by the encryption segment to encrypt the traffic flow to form the encrypted traffic flow (e.g., an encryption algorithm, an encryption key, a security association, or the like), or the like, as well as various combinations thereof). Various example embodiments for supporting security for communications based on use of encryption segments may be configured to support security for various types of traffic flows within networks (e.g., encrypted services, encrypted tunnels supporting services, or the like, as well as various combinations thereof). Various example embodiments for supporting security for communications based on use of encryption segments may be configured to support security for traffic flows based on various Layers of the Open Systems Interconnection (OSI) model. Various example embodiments for supporting security for communications based on use of encryption segments may be configured to support security for various types of traffic flows at various OSI Layers, such as a Layer 3 traffic flow (e.g., an Internet Protocol (IP) traffic flow or other suitable Layer 3 traffic flow), a Layer 2.5 traffic flow (e.g., a Multiprotocol Label Switching (MPLS) traffic flow or other suitable Layer 2.5 traffic flow), or the like. Various example embodiments for supporting security for communications based on use of encryption segments may be configured to support security based on various network security protocols which may operate at various OSI Layers, such as a Layer 2 network security protocol (e.g., an Institute of Electrical and Electronics Engineers (IEEE) 802 protocol such as IEEE 802.1AE or other suitable type of Layer 2 network security protocol) or other suitable network security protocol configured to support encryption of traffic flows in conjunction with providing security for traffic flows based on use of encryption segments. It will be appreciated that these and various other example embodiments and advantages or potential advantages of supporting security for communications may be further understood by way of reference to the various figures, which are discussed further below.

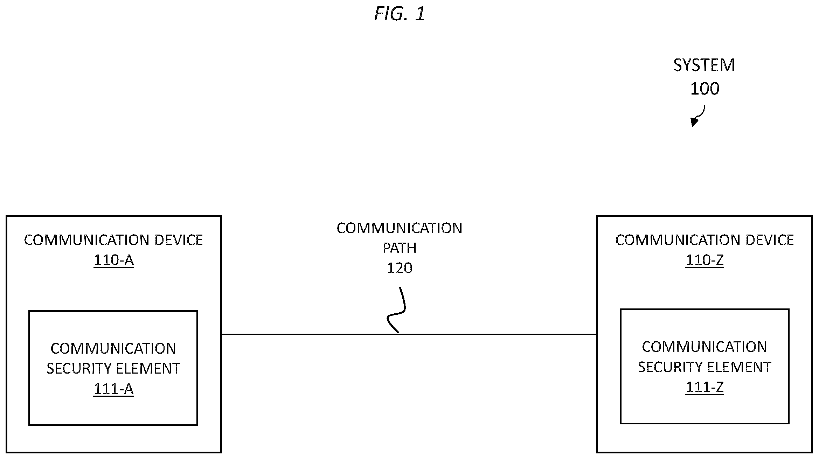

FIG. 1 depicts an example embodiment of a system configured to support security for communications based on use of encryption segments.

The system 100 includes a pair of communication devices 110-A and 110-Z (collectively, communication devices 110) which may communicate over a communication path 120. The communication devices 110 may be any devices which may communicate over a communication path and the communication path 120 may be any path over which communication devices may communicate and, thus, the communication devices 110 and the communication path 120 may be associated with various communication contexts. For example, the communication devices 110 may include end user devices, routers, switches, or the like. For example, the communication path 120 may represent a single link, multiple links, a portion of a communication network, a communication network, multiple communication networks, or the like. For example, the communication devices 110-A and 110-Z may be, respectively, a customer router and a provider router, a pair of provider routers, a pair of customer routers communicating over a communication network (e.g., customer routers associated with Enterprise networks, customer routers associated with data center networks, or the like), or the like. It will be appreciated that the foregoing examples are merely a few of the ways in which example embodiments may be used to support security for communications of communication devices.

The communication devices 110 are configured to support security for communications exchanged between the communication devices 110 over the communication network 120. The communication devices 110 may be configured to support security for communications based on a network security protocol that supports encryption functions and authentication functions. For example, for packets being sent from the communication device 110-A to the communication device 110-Z, the communication device 110-A may apply encryption and authentication to the packets based on the network security protocol and the communication device 110-Z may validate the authentication and perform decryption based on the network security protocol. Similarly, for example, for packets being sent from the communication device 110-Z to the communication device 110-A, the communication device 110-Z may apply encryption and authentication to the packets based on the network security protocol and the communication device 110-A may validate the authentication and perform decryption based on the network security protocol.

The communication devices 110 may be configured to support security for communications of communication protocols operating above Layer 2. The communication devices 110 may be configured to support security for communications of communication protocols operating at Layer 2.5 (e.g., Multiprotocol Label Switching (MPLS) protocols or other suitable Layer 2.5 protocols). The communication devices 110 may be configured to support security for communications of communication protocols operating at Layer 3 (e.g., Internet Protocol (IP), such as IP version 4 (IPv4) or IP version 6 (IPv6), Segment Routing (SR) over IPv6 (SRv6), or other suitable Layer 3 protocols). The communication devices 110 may be configured to support security for communications of communication protocols operating above Layer 2 where the communications of the communications protocols operating above Layer 2 are transported using a communications protocol operating at Layer 2 (e.g., Ethernet or other suitable Layer 2 communication protocols). The communication devices 110 may be configured to support security for communications in a manner that enables portions of the packets to be left in the clear (i.e., unencrypted and unauthenticated) such that devices along the communication path 120 can handle the packets based on the portions of the packets left in the clear (e.g., switching MPLS labels where the packets are MPLS packets, routing based on IP addresses where the packets are IP packets, or the like, as well as various combinations thereof). It will be appreciated that the communication devices 110 may be configured to support security for communications of various other communication protocols which may or may not be associated with various OSI Layers.

The communication devices 110 may be configured to support security for communications of communication protocols using various network security protocols. For example, as primarily presented herein for purposes of clarity, the communication devices 110 may be configured to support security for communications of communication protocols using a Layer 2 network security protocol (e.g., an Institute of Electrical and Electronics Engineers (IEEE) 802 protocol such as IEEE 802.1AE or other suitable type of Layer 2 network security protocol). For example, the communication devices 110 may be configured to support security for communications using a Layer 2 network security protocol that is implemented in a manner that enables portions of the packets to be left in the clear (i.e., unencrypted and unauthenticated) such that devices along the communication path 120 can handle the packets based on the portions of the packets left in the clear (e.g., switching MPLS labels where the packets are MPLS packets, routing based on IP addresses where the packets are IP packets, or the like, as well as various combinations thereof). It will be appreciated that the communication devices 110 may be configured to support security for communications of communication protocols using various other encryption and authentication protocols which may or may not be associated with various OSI Layers.

The communication devices 110 may be configured to support security for communications based on use of encryption segments having encryption SIDs associated therewith, respectively. The use of encryption segments to support security for encrypted traffic flows may be applied for various types of traffic flows which may be secured via encryption, such as Layer 3 traffic flows (e.g., a Layer 3 service, an SRv6 tunnel, a Generic Routing Encapsulation (GRE) tunnel, an IP flow, or the like), Layer 2.5 traffic flows (e.g., an MPLS tunnel or the like), Layer 2 traffic flows (e.g., a Layer 2 service over MPLS or the like), or the like, as well as various combinations thereof.

The encryption segment on an encrypting node that encrypts a traffic flow to form an encrypted traffic flow includes the various encryption resources used by the encrypting node to encrypt the traffic flow to form the encrypted traffic flow. For example, such encryption resources may include one or more encryption algorithms to be applied to the traffic flow to form the encrypted traffic flow, one or more encryption keys to be used by the encryption algorithm(s) to encrypt the traffic flow to form the encrypted traffic flow, or the like, as well as various combinations thereof. It will be appreciated that the encryption segment on the encrypting node may include various other types of encryption resources which may be used by the encrypting node to encrypt the traffic flow to form the encrypted traffic flow.

The encryption segment on an encrypting node that encrypts a traffic flow to form an encrypted traffic flow may be uniquely identified within the network using an encryption SID and, thus, the encryption SID may be configured to uniquely identify various aspects of the encrypted traffic flow within the network. The encryption SID for the encryption segment may uniquely identify the encrypted traffic flow provided by the encryption segment. The encryption SID for the encryption segment may uniquely identify the encrypting node and its associated encryption segment as being the source of encryption of the encrypted traffic flow. The encryption SID for the encryption segment may identify encryption process details for encryption of the traffic flow by the encryption segment of the encrypting node to form the encrypted traffic flow (e.g., the encryption algorithm used by the encryption segment for encryption of the traffic flow to form the encrypted traffic flow, a key used by the encryption segment for encryption of the traffic flow to form the encrypted traffic flow, or the like, as well as various combinations thereof). It will be appreciated that the encryption SID associated with the encryption segment may uniquely identify various other aspects associated with encryption of a traffic flow by the encryption segment to form the associated encrypted traffic flow.

The communication devices 110 may be configured to support security for communications, based on use of encryption segments, using communication security elements 111. More specifically, the communication device 110-A may be configured to support security for packets transmitted toward communication device 110-Z (e.g., encryption and authentication computation functions) and packets received from communication device 110-Z (e.g., decryption and authentication verification functions) based on a communication security element 111-A and, similarly, the communication device 110-Z may be configured to support security for packets transmitted toward communication device 110-A (e.g., encryption and authentication computation functions) and packets received from communication device 110-A (e.g., decryption and authentication verification functions) based on a communication security element 111-Z. The communication security elements 110 may support encryption segments for performing encryption functions for encrypting traffic flows to form encrypted traffic flows. The communication security elements 111 may be configured to support various other functions for supporting security for communications according to various example embodiments presented herein.

It will be appreciated that the system 100, although primarily presented within the context of a relatively simple arrangement of elements, may be any system including any elements (e.g., devices, networks, or the like) which may support secure communications according to various example embodiments presented herein.

Various example embodiments for supporting security for communications within a network may be configured to support security for communications within a network based on use of an encryption SID configured to uniquely identify encryption resources within the network.

The encryption SID may be configured to uniquely identify various aspects of an encrypted traffic flow within the network. For example, the encryption SID may uniquely identify the traffic flow to be encrypted by the encryption segment of the encrypting node, the encrypted traffic flow formed by the encryption segment of the encrypting node, encryption process details for encryption of the traffic flow by the encryption segment to form the encrypted traffic flow (e.g., the encryption algorithm used for encryption of the traffic flow to form the encrypted traffic flow, a key used for encryption of the traffic flow to form the encrypted traffic flow, or the like), or the like, as well as various combinations thereof. The encryption SID may be configured within the network, to uniquely identify the associated traffic flow, in various ways. The unique identification of an encrypted traffic flow within a network based on an encryption SID may be used for various purposes within the network. The encryption SID for a traffic flow may be encoded within the packets of the traffic flow in various ways, which may depend on the type of traffic flow with which the encryption SID is associated. It will be appreciated that these and various other aspects of encryption SID are discussed further below.

The encryption SID for an encrypted traffic flow may be supported within the network, to present the encryption segment to the network and to uniquely identify the encrypted traffic flow within the network, in various ways. The encryption SID for an encrypted traffic flow may be assigned from a unique SID space for the encryption segments (e.g., an MPLS Label space, an IPv6 segment space, or the like). The encryption SID for an encrypted traffic flow may take various forms (e.g., an MPLS label, an SRv6 SID, or the like). The encryption SID for an encrypted traffic flow may be configured within the network manually or automatically. The encryption SID for an encrypted traffic flow may be configured within the network by statically configuring the encryption SID on the node of the network for the encryption segment with which the encryption SID is associated. The encryption SID of an encrypted traffic flow configured within the network for the associated encryption segment may be advertised within the network (e.g., via an Interior Gateway Protocol (IGP), a Border Gateway Protocol (BGP), or the like, as well as various combinations thereof).

The unique identification of an encrypted traffic flow within a network based on an encryption SID may be used for various purposes within the network (e.g., for enabling various actions to be performed on the encrypted traffic flow at various locations within the network, for improving various aspects of encryption and supported for encrypted flows at various locations within the network, or the like, as well as various combinations thereof).

For example, unique identification of an encrypted traffic flow within a network based on an encryption SID may be used on the encrypting node for various purposes. For example, on the source encrypting node, the encryption segment associated with the encryption SID may be configured to encrypt a unique traffic flow (using an encryption and authentication algorithm and associated key) and the associated encryption SID may uniquely identify the traffic flow on the hardware and such that the source encrypting node can encrypt packets of the traffic flow via the encryption segment to form the encrypted traffic flow. For example, on the source encrypting node, the encryption SID can uniquely identify the traffic flow on the hardware without having to program the entire signature of the traffic flow (e.g., the MPLS label stack of an MPLS traffic flow, a tuple of an IP traffic flow (e.g., source and destination IP address, 5-tuple, or the like), the entire flow header of the traffic flow, or the like) on the hardware. It will be appreciated that the unique identification of an encrypted traffic flow within a network based on an encryption SID may be used at the encrypting node for various other purposes.

For example, unique identification of an encrypted traffic flow within a network based on an encryption SID may be used on the transit nodes for various purposes. For example, where a transit node is a source encrypting node for a first traffic flow and a transit node for a second traffic flow, since the first and second traffic flows may have identical traffic flow signatures (e.g., headers, combination of header fields, or the like, which may be used to match identifying packets for encryption/decryption), the encryption SIDs of the first and second traffic flows may be used to ensure that the transit node only encrypts the first traffic flow and avoids double encryption of the second traffic flow (e.g., the transit node will only encrypt the first traffic flow that is originated locally at the transit node based on the encryption SID that is programmed on its hardware, while allowing the second traffic flow to be passed through without encryption). It will be appreciated that the unique identification of an encrypted traffic flow within a network based on an encryption SID may be used at the transit nodes for various other purposes.

For example, unique identification of an encrypted traffic flow within a network based on an encryption SID may be used on the decrypting node for various purposes. For example, unique identification of an encrypted traffic flow within a network based on an encryption SID may be used on the decrypting node for various purposes. For example, on the destination decrypting node, the encryption SID can uniquely identify the traffic flow on the hardware and such that the destination decrypting node can decrypt packets of the traffic flow via its own key and algorithm. For example, on the destination decrypting node, the encryption SID can uniquely identify the traffic flow on the hardware without having to program the entire signature of the traffic flow (e.g., the MPLS label stack of an MPLS traffic flow, a tuple of an IP traffic flow (e.g., source and destination IP address, 5-tuple, or the like), the entire flow header of the traffic flow, or the like) on the hardware. It will be appreciated that the unique identification of an encrypted traffic flow within a network based on an encryption SID may be used at the decrypting node for various other purposes.

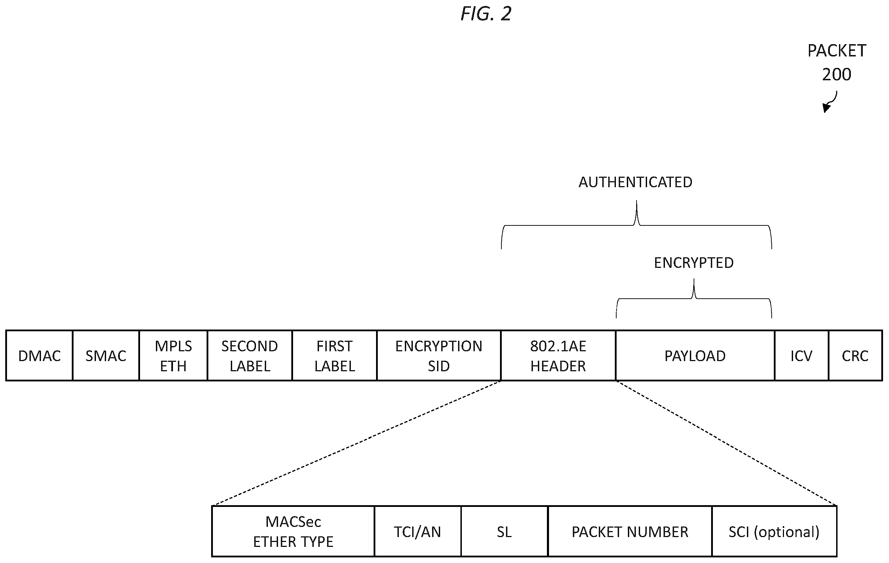

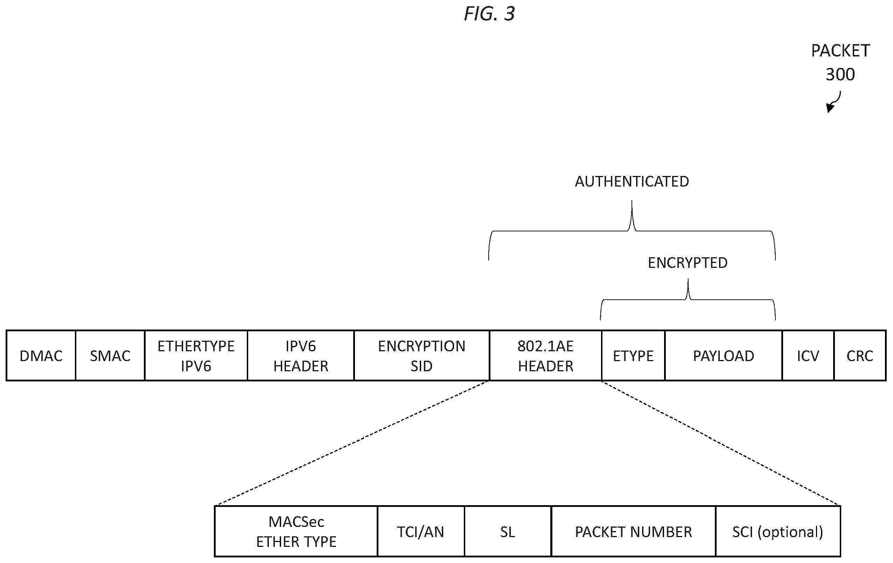

The encryption SID for a traffic flow may be encoded within the packets of the traffic flow in various ways, which may depend on the type of traffic flow with which the encryption SID is associated. The encrypting node pushes the encryption SID in the packet at the offset of where the packet is to be encrypted for that segment, including the encrypted portion of the packet and the encryption header associated with the encrypted portion of the packet. For example, where encryption is based on IEEE 802.1AE, the encrypting node pushes the 802.1AE header on the encrypted portion of the packet and then pushes the encryption SID on the 802.1AE header. The encrypting node then pushes the transport SIDs, which connects that encrypting node to the decrypting node, on the encryption SID. For example, the transport SID may include an MPLS header, an IP header, or the like, as well as various combinations thereof. The encrypting node may push various other headers onto the packet on the transport SID for supporting communication of the packet within the network (e.g., dot1q headers, Ethernet headers, or the like, as well as various combinations thereof). Example embodiments of packet formats for illustrating use of encryption SIDs for support MPLS security and IP security based on IEEE 802.1AE are presented with respect to FIG. 2 and FIG. 3, respectively.

FIG. 2 depicts an example embodiment of a packet format for illustrating application of encryption and authentication to a packet, in a manner for supporting MPLS security based on IEEE 802.1AE, based on an encryption SID. In the packet 200 of FIG. 2, it is assumed that the encryption SID is an MPLS label assigned from the encryption label space. As illustrated in FIG. 2, the packet 200 includes a payload, an 802.1AE Header prepended to the payload, an Encryption SID (ESID) prepended to the 802.1AE Header, an MPLS header prepended to the ES (including a First Label prepended to the ES and a Second Label prepended to the First Label), an Ethernet header prepended to the MPLS header (including an EtherType MPLS field prepended to the Second Label, an SMAC field prepended to the EtherType MPLS field, and a DMAC field prepended to the SMAC field), an Integrity Check Value (ICV) field appended to the payload, and a Cyclic Redundancy Check (CRC) field appended to the ICV field. The packet 200 includes a first portion which is encrypted (including the payload), a second portion which is authenticated (including the payload and the 802.1AE header), and a third portion which is neither encrypted nor authenticated (including the ES, the MPLS header, the Ethernet header, and the ICV and CRC fields). It will be appreciated that, although primarily presented with respect to example embodiments in which specific types of MPLS labels are left unencrypted and unauthenticated for supporting MPLS security based on IEEE 802.1AE, various other types of MPLS labels may be left unencrypted and unauthenticated in order to support MPLS security based on IEEE 802.1AE for various types of MPLS solutions (e.g., Border Gateway Protocol (BGP) - Labeled Unicast (BGP-LU) labels, Entropy Label Indicator (ELI) labels, Entropy Labels (ELs), or the like, as well as various combinations thereof As indicated herein, this leaves the MPLS header unencrypted and unauthenticated, thereby enabling devices along the path to operate on the MPLS header as needed.

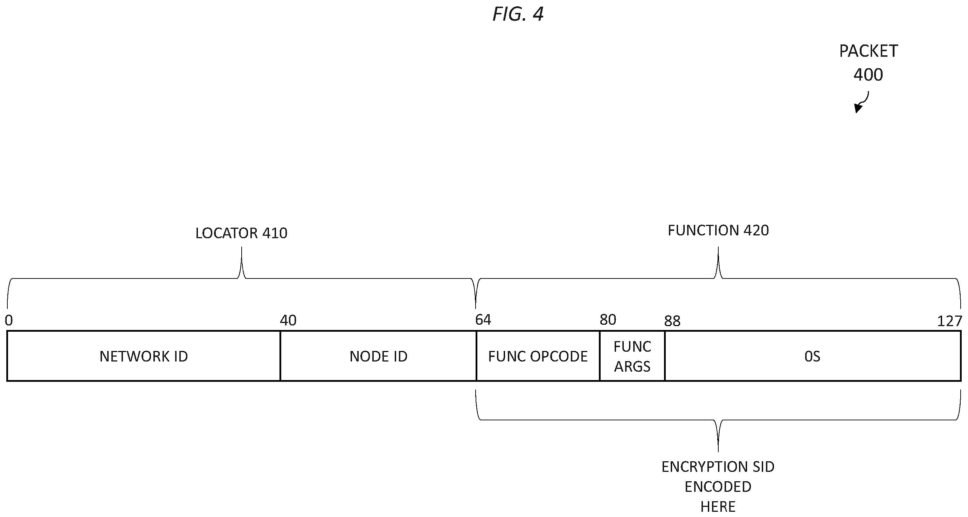

FIG. 3 depicts an example embodiment of a packet format for illustrating application of encryption and authentication to a packet, in a manner for supporting IP security based on IEEE 802.1AE, based on an encryption SID. In the packet 300 of FIG. 2, it is assumed that the ES is an IPv6 address assigned from the encryption label space. As illustrated in FIG. 3, the packet 300 includes a payload, an EtherType (ETYPE) field prepended to the payload, an 802.1AE Header prepended to the ETYPE field, an Encryption SID (ESID) prepended to the 802.1AE Header, an IPv6 header prepended to the Encryption SID, an Ethernet header prepended to the IPv6 header (including an EtherType IPv6 field prepended to the IPv6 header, an SMAC field prepended to the EtherType IPv6 field, and a DMAC field prepended to the SMAC field), an Integrity Check Value (ICV) field appended to the payload, and a Cyclic Redundancy Check (CRC) field appended to the ICV field. The packet 300 includes a first portion which is encrypted (including the payload and the ETYPE field), a second portion which is authenticated (including the payload, the ETYPE field, and the 802.1AE header), and a third portion which is neither encrypted nor authenticated (including the ES, the IPv6 header, and the Ethernet header, as well as the ICV and CRC fields). As indicated herein, this leaves the IPv6 header and the Ethernet header unencrypted and unauthenticated, thereby enabling devices along the path to operate on the IPv6 header and/or the Ethernet header as needed. An example of an SRv6 SID which may be configured to include an ES for use in an SRv6 context is presented with respect to FIG. 4.

FIG. 4 depicts an example embodiment of an encoding of an encryption SID in a Segment Identifier (SID) for use within a segment routing over IPv6 (SRv6) header.

As illustrated in FIG. 4, the SID 400 includes a Locator 410 and a Function 420. The 64-bit Locator 410 includes a 40-bit Network ID field and a 24-bit Node ID field. The 64-bit Function 420 includes a 16-bit Func OPCODE field, an 8-bit Func ARGS field, and a 40-bit trailing field populated with zeros. In at least some example embodiments, the ES may be programmed within the 64-bit Function 420. In at least some example embodiments, the ES may be programmed within the 16-bit Func OPCODE field of the 64-bit Function 420.

As may be further understood based on FIG 4, an SID in an SRv6 context may be configured to support an ES as follows. In this example, the SRv6 SID space is 2001:db8:cccc::/48. In this example, 2001:db8:cccc:<N>::/64 is the SID space at node N for the encryption SID. In this example, Function :CN:: is End.X with PSP to node N. In this example, 2001:db8:cccc:<N>:C<J>::/128 is End.X PSP from node N to J. In this example, Function :F<N>:: is End.encryption function. In this example, 2001:db8:cccc:<N>:F<N>::/128 is End.encryption at node N. In this example, the function can identify the encryption SID throughout the network and make the packet only relevant to the encrypting node and decrypting node.

It will be appreciated that the ES may be encoded within SIDs in an SRv6 context in various other ways.

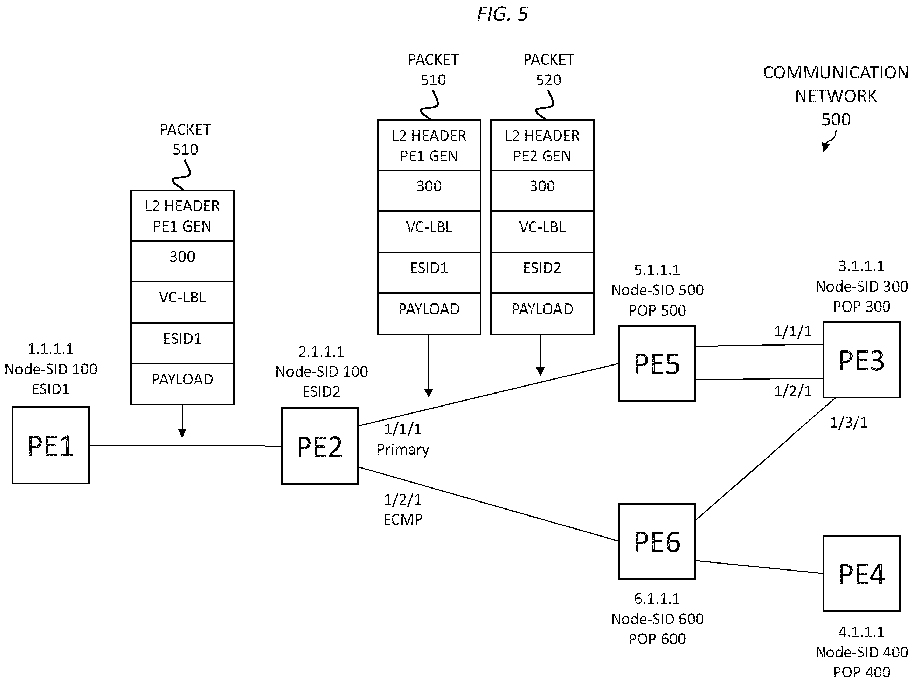

FIG. 5 depicts an example embodiment of a communication network for illustrating use of encryption SIDs for uniquely identifying encrypted traffic flows.

In FIG. 5, the communication network 500 includes six routers, denoted as PE1, PE2, PE3, PE4, P5, and P6, where PE1 is connected to PE2 are connected, PE2 is connected to P5 and P6 in an Equal Cost Multipath (ECMP) arrangement, P5 is connected to PE3 via two parallel connections, and P6 is connected to PE3 and PE4. The six routers are configured as follows: (1) PE1 is denoted as having an IP address = 1.1.1.1, a Node-SID = 100, and an ESID = ESID1, (2) PE2 is denoted as having an IP address = 2.1.1.1, a Node-SID = 200, and an ESID = ESID2, (3) PE3 is denoted as having an IP address = 3.1.1.1 and a Node-SID = 300, (4) PE4 is denoted as having an IP address = 4.1.1.1 and a Node-SID = 400, (5) P5 is denoted as having an IP address = 5.1.1.1 and a Node-SID = 500, and (3) P6 is denoted as having an IP address = 6.1.1.1 and a Node-SID = 600.

As a first example, consider the network of FIG. 5 where PE1 is sending a flow to PE3 with node SID 300 (the node SID of PE3) and, at the same time, PE2 is the transit for PE1 and also an ingress LER for another service that is originated on PE2 that is also going to PE3 with node SID 300 (again, the node SID of PE3). In this first example, in the absence of use of encryption segments and its corresponding encryption SID, the hardware on PE1 and PE2 can be programmed with the following rule: [if label 300 (node SID of PE3) is seen, encrypt via key 1 and algorithm x]. However, since PE2 will match traffic from PE1 and PE2, the PE1 traffic will get encrypted on PE1 and will then get encrypted a second time on PE2. This is an example where encryption SIDs may be used to prevent the double encryption of the PE1 traffic at PE1 and PE2. In this first example, encryption SIDs may be used to prevent the double encryption of the PE1 traffic at PE1 and PE2. As illustrated in FIG. 5, PE1 and PE2 each will have its own unique encryption SID as follows: PE1→ESID1 and PE2→ESID2. So, on the hardware, ESID1 is programmed on PE1 only and ESID2 is programmed on PE2 only. As such, the hardware on PE2 will only encrypt packets with ESID2 and will not encrypt any other flows (including the one that has ESID1 that is passing through PE2). This ensures that the PE1 traffic will only be encrypted on PE1 and will not be re-encrypted again on PE2. As illustrated in FIG. 5, the packet 510 originated by PE1 and encrypted on PE1 includes ESID1 and passes through PE2 with ESID1 and without being further encrypted by PE2, whereas the packet 520 originated by PE2 and encrypted on PE2 includes ESID2.

As a second example, consider an example similar to the first example above, but in which the encryption SID, rather than a label in packet, is used to match the packet on the datapath for encryption and decryption. This may be used, for example, where the signature of the packet that is to be matched for encryption and decryption is complicated and use of the encryption SID for this purpose would improve one or more aspects of matching the packet on the datapath for encryption and decryption (e.g., the hardware no longer has to be programmed with the entire label stack or other packet signature information that might require more storage space than the encryption SID, the time and resources needed to match on the encryption SID may be less than the time and resources that might otherwise be needed to match on the entire label stack or other packet signature information, or the like, as well as various combinations thereof). For example, in the network of FIG. 5, the datapath, rather than being configured to match the node SID 300 for encryption on PE1 or PE2, may be configured to match the encryption SIDs ESID1 or ESID2 for determining encryption and decryption of packets. It will be appreciated that, while the methods of matching are similar, there may be cases where matching based on the encryption SIDs may be more efficient (e.g., if a packet has a large label stack or if the network has pushed additional label stack on top of the packet because of a fast reroute in the network or the packet arriving on a separate tunnel interface or tunnel-in-tunnel, then programming the datapath with the encryption SID and matching packets on the datapath based on the encryption SID will be more efficient then programming and matching using the entire label stack. It will be appreciated that these types of efficiencies are enabled since the encryption SID uniquely identifies the encryption source / encryption segment and resource or entity in the network.

It will be appreciated that the examples presented with respect to the network of FIG. 5 represent only a few of the ways in which encryption segments and encryption SIDs may be used for improving security for communications in networks.

It will be appreciated that, although primarily presented herein with respect to example embodiments in which packets transported within a network include only a single encryption SID, in at least some example embodiments packets transported within a network may include multiple encryption SIDs (e.g., double encryption, triple encryption, and so forth). In such embodiments, each encryption segment will push the encryption SID for that encryption segment and encrypt after the encryption SID (where it will be understood that this encryption may result in placement of an encryption header between the portion of the packet that is encrypted and the encryption SID which identifies the encrypted traffic flow), respectively. This may be used, for example, for encryption of services within tunnels, encryption of tunnels within tunnels, and so forth, in various combinations which may be applied in various ways at various hierarchical levels. It will be appreciated that various layers of encryption based on encryption segments may be employed within various communication contexts to provide communications security.

It will be appreciated that, although primarily presented herein with respect to example embodiments in which in which encryption SIDs uniquely identify a particular type of resource to be encrypted (namely, traffic flows, where it will be appreciated that such traffic flows themselves may be associated with specific flows, services, tunnels, applications, nodes, and so forth), in at least some example embodiments encryption SIDs may be considered to uniquely identify other types of encryption resources (e.g., services, tunnels, applications, nodes, and so forth).

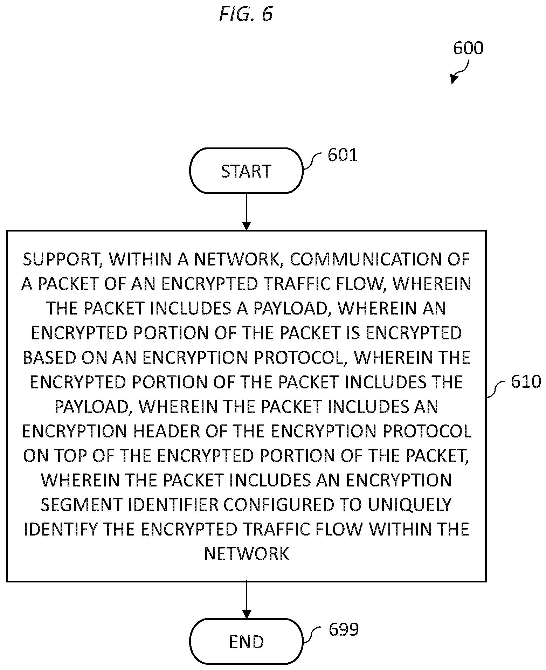

FIG. 6 depicts an example embodiment of a method for supporting security for communications. It will be appreciated that, although primarily presented herein as being performed serially, at least a portion of the functions of the method 600 may be performed contemporaneously or in a different order than as presented in FIG. 6. At block 601, the method 600 begins. At block 610, support, within a network, communication of a packet of an encrypted traffic flow, wherein the packet includes a payload, wherein an encrypted portion of the packet is encrypted based on an encryption protocol, wherein the encrypted portion of the packet includes the payload, wherein the packet includes an encryption header of the encryption protocol on top of the encrypted portion of the packet, wherein the packet includes an encryption segment identifier configured to uniquely identify encrypted traffic flow within the network. The encryption segment identifier may be configured to identify, on an encrypting node, an encryption segment configured to encrypt the encrypted traffic flow based on a set of encryption resources. The encryption segment identifier may be configured to identify the encrypting node as a source of the encrypted traffic flow. The set of encryption resources may include an encryption algorithm used to encrypt the encrypted traffic flow and an encryption key used to encrypt the encrypted traffic flow. The encryption segment identifier may be configured to identify an encrypting node that encrypts the encrypted traffic flow. The encryption segment identifier may be configured to identify an encryption segment, on the encrypting node, configured to encrypt the encrypted traffic flow based on a set of encryption resources. The set of encryption resources may include an encryption algorithm used to encrypt the encrypted traffic flow and an encryption key used to encrypt the encrypted traffic flow. The encryption segment identifier may be configured to identify a set of encryption resources used by an encryption segment to encrypt the encrypted traffic flow. The set of encryption resources may include an encryption algorithm used to encrypt the encrypted traffic flow and an encryption key used to encrypt the encrypted traffic flow. The encryption segment identifier may be arranged on top of the encryption header of the encryption protocol. The encrypted traffic flow may be an encrypted service or an encrypted tunnel supporting a set of services. The encrypted traffic flow may be a Layer 2.5 flow or a Layer 3 flow. The encrypted traffic flow may be a Multiprotocol Label Switching (MPLS) flow or an Internet Protocol (IP) flow. The encrypted portion of the packet may include at least one of at least one Multiprotocol Label Switching (MPLS) label or at least one Internet Protocol (IP) header. The encrypted portion of the packet may include a second encryption segment identifier configured to uniquely identify a second encrypted traffic flow within the network. The packet may include a transport segment identifier configured to connect an encrypting node that encrypts the encrypted traffic flow to a decrypting node that decrypts the encrypted traffic flow, where the transport segment identifier may be arranged on top of the encryption segment identifier. The packet may include at least one communication header arranged on top of the encryption segment identifier. The at least one communication header may include at least one of a Layer 3 header, a Layer 2.5 header, or a Layer 2 header. The at least one communication header may include at least one of an Internet Protocol (IP) header, a Multiprotocol Label Switching (MPLS) header, or an Ethernet header. The packet may include a second encryption segment identifier configured to uniquely identify a second encrypted traffic flow within the network, where the second encryption segment identifier may be arranged above the encryption segment identifier. The support for communication of the packet may include determining, by an encrypting node, that the packet belongs to the encrypted traffic flow, identifying, by the encrypting node based on the packet, the encryption segment, and generating, by the encrypting node based on the encryption segment identifier, the packet. The support for communication of the packet may include receiving, by a node, the packet, wherein the packet includes at least one communication header arranged on top of the encryption segment identifier and sending, by the node toward a destination node based on the at least one communication header, the packet. The support for communication of the packet may include determining, by a decrypting node based on the encryption segment identifier in the packet, that the packet is to be decrypted, decrypting, by the decrypting node, the encrypted portion of the packet to form a decrypted packet, and sending, by the decrypting node, the decrypted packet. At block 699, the method 600 ends.

Various example embodiments for supporting security for communications may provide various advantages or potential advantages. For example, various example embodiments for supporting security for communications based on encryption segments and associated encryption SIDs may enable the unique identification of encryption resources within networks. For example, various example embodiments for supporting security for communications based on encryption segments and associated encryption SIDs may enable the unique identification of encrypted traffic flows within networks, which may be useful in various contexts including various tunnel context (e.g., Segment Routing (SR) and so forth) where the traffic flow signature can be identical for multiple tunnels. For example, various example embodiments for supporting security for communications based on encryption segments and associated encryption SIDs may be configured to obviate the need for the encrypting and decrypting nodes (e.g., the encryption hardware on the encrypting node and the decrypting hardware on the decrypting node) to be programmed with the exact traffic flow signature (e.g., MPLS label stack, IP tuple, or the like) of the traffic flow to be encrypted and decrypted; rather, the encryption SID may be used for matching traffic flows on the encrypting and decrypting nodes (as well as provide associated information about the encryption algorithm and encryption key). For example, various example embodiments for supporting security for communications based on encryption segments and associated encryption segment SIDs may be configured to prevent redundant encryption in transit nodes. Various example embodiments for supporting security for communications may provide various other advantages or potential advantages.

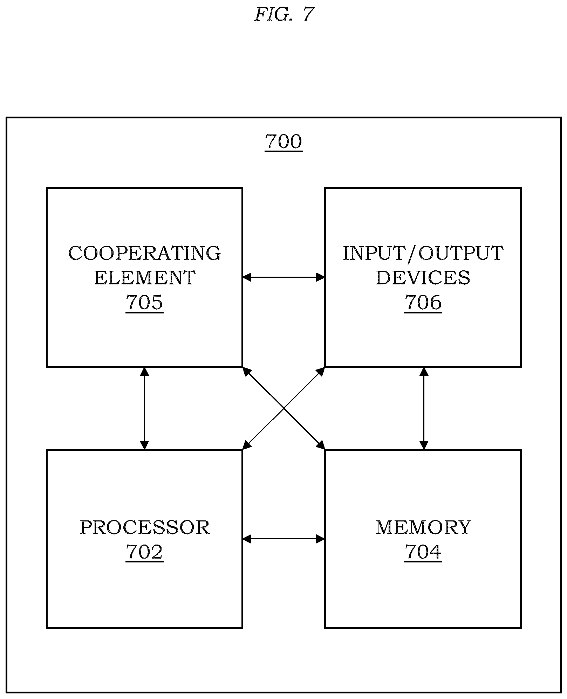

FIG. 7 depicts an example embodiment of a computer suitable for use in performing various functions presented herein.

The computer 700 includes a processor 702 (e.g., a central processing unit (CPU), a processor, a processor having a set of processor cores, a processor core of a processor, or the like) and a memory 704 (e.g., a random access memory, a read only memory, or the like). The processor 702 and the memory 704 may be communicatively connected. In at least some example embodiments, the computer 700 may include at least one processor and at least one memory including computer product code, wherein the at least one memory and the computer product code are configured, with the at least one processor, to cause the computer 700 to perform various functions presented herein.

The computer 700 also may include a cooperating element 705. The cooperating element 705 may be a hardware device. The cooperating element 705 may be a process that can be loaded into the memory 704 and executed by the processor 702 to implement various functions presented herein (in which case, for example, the cooperating element 705 (including associated data structures) can be stored on a non-transitory computer-readable storage medium, such as a storage device or other suitable type of storage element (e.g., a magnetic drive, an optical drive, or the like)).

The computer 700 also may include one or more input/output devices 706. The input/output devices 706 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a compact disk drive, a hard disk drive, a solid state drive, or the like), or the like, as well as various combinations thereof.

It will be appreciated that computer 700 may represent a general architecture and functionality suitable for implementing functional elements described herein, portions of functional elements described herein, or the like, as well as various combinations thereof. For example, computer 700 may provide a general architecture and functionality that is suitable for implementing one or more elements presented herein, such as a communication device 110, a portion of a communication device 110, a communication security element 111, a portion of a communication security element 111, or the like, as well as various combinations thereof.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer-readable media), transmitted via a data stream in a broadcast or other signal bearing medium, and/or stored within a memory within a computing device operating according to the instructions.

It will be appreciated that the term "or" as used herein refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. Apparatus comprising means for performing:
supporting, within a network, communication of a packet of an encrypted traffic flow,
wherein the packet includes a payload, wherein an encrypted portion of the packet is encrypted based on an encryption protocol, wherein the encrypted portion of the packet includes the payload, wherein the packet includes an encryption header of the encryption protocol on top of the encrypted portion of the packet, wherein the packet includes an encryption segment identifier configured to uniquely identify the encrypted traffic flow within the network,
wherein the encryption segment identifier is configured to identify an encryption segment configured to encrypt the encrypted traffic flow based on a set of encryption resources,
wherein the encryption segment identifier is configured to identify the encrypting node as a source of the encrypted traffic flow.

2. The apparatus according to claim 1, wherein the set of encryption resources includes an encryption algorithm used to encrypt the encrypted traffic flow and an encryption key used to encrypt the encrypted traffic flow.

3. The apparatus according to claim 1 or 2, wherein the encryption segment identifier is arranged on top of the encryption header of the encryption protocol.

4. The apparatus according to any of claims 1 to 3, wherein the encrypted traffic flow is an encrypted service or an encrypted tunnel supporting a set of services.

5. The apparatus according to any of claims 1 to 4, wherein the encrypted traffic flow is a Layer 2.5 flow or a Layer 3 flow.

6. The apparatus according to any of claims 1 to 5, wherein the packet includes a transport segment identifier configured to connect an encrypting node that encrypts the encrypted traffic flow to a decrypting node that decrypts the encrypted traffic flow, wherein the transport segment identifier is arranged on top of the encryption segment identifier.

7. The apparatus according to any of claims 1 to 6, wherein the packet includes at least one communication header arranged on top of the encryption segment identifier.

8. The apparatus according to any of claims 1 to 6, wherein, to support communication of the packet, the apparatus comprises means for performing:
determining, by an encrypting node, that the packet belongs to the encrypted traffic flow;
identifying, by the encrypting node based on the packet, the encryption segment; and
generating, by the encrypting node based on the encryption segment identifier, the packet.

9. The apparatus according to any of claims 1 to 7, wherein, to support communication of the packet, the apparatus comprises means for performing:
receiving, by a node, the packet, wherein the packet includes at least one communication header arranged on top of the encryption segment identifier; and
sending, by the node toward a destination node based on the at least one communication header, the packet.

10. The apparatus according to any of claims 1 to 7, wherein, to support communication of the packet, apparatus comprises means for performing:
determining, by a decrypting node based on the encryption segment identifier in the packet, that the packet is to be decrypted;
decrypting, by the decrypting node, the encrypted portion of the packet to form a decrypted packet; and
sending, by the decrypting node, the decrypted packet.

11. The apparatus according to any of claims 1 to 10, wherein the means comprises: at least one processor; and
at least one memory storing instructions that, when executed by the at least one processor, cause the performance of the apparatus.

12. A computer-readable storage medium storing computer program code configured to cause an apparatus at least to perform:
supporting, within a network, communication of a packet of an encrypted traffic flow, wherein the packet includes a payload, wherein an encrypted portion of the packet is encrypted based on an encryption protocol, wherein the encrypted portion of the packet includes the payload, wherein the packet includes an encryption header of the encryption protocol on top of the encrypted portion of the packet, wherein the packet includes an encryption segment identifier configured to uniquely identify the encrypted traffic flow within the network, wherein the encryption segment identifier is configured to identify an encryption segment configured to encrypt the encrypted traffic flow based on a set of encryption resources,
wherein the encryption segment identifier is configured to identify the encrypting node as a source of the encrypted traffic flow.

13. A method, comprising:
supporting, within a network, communication of a packet of an encrypted traffic flow, wherein the packet includes a payload, wherein an encrypted portion of the packet is encrypted based on an encryption protocol, wherein the encrypted portion of the packet includes the payload, wherein the packet includes an encryption header of the encryption protocol on top of the encrypted portion of the packet, wherein the packet includes an encryption segment identifier
configured to uniquely identify the encrypted traffic flow within the network (610), wherein the encryption segment identifier is configured to identify an encryption segment configured to encrypt the encrypted traffic flow based on a set of encryption resources,
wherein the encryption segment identifier is configured to identify the encrypting node as a source of the encrypted traffic flow.

## Patentansprüche

1. Vorrichtung, umfassend Mittel zum Durchführen von:
Unterstützen, innerhalb eines Netzwerks, einer Kommunikation eines Pakets eines verschlüsselten Verkehrsflusses,
wobei das Paket eine Nutzlast umfasst, wobei ein verschlüsselter Abschnitt des Pakets auf der Grundlage eines Verschlüsselungsprotokolls verschlüsselt ist, wobei der verschlüsselte Abschnitt des Pakets die Nutzlast umfasst, wobei das Paket einen Verschlüsselungs-Header des Verschlüsselungsprotokolls oberhalb des verschlüsselten Abschnitts des Pakets umfasst, wobei das Paket einen Verschlüsselungssegment-Identifikator umfasst, der konfiguriert ist, den verschlüsselten Verkehrsfluss innerhalb des Netzwerks eindeutig zu identifizieren,
wobei der Verschlüsselungssegment-Identifikator konfiguriert ist, ein Verschlüsselungssegment zu identifizieren, das konfiguriert ist, den verschlüsselten Verkehrsfluss auf der Grundlage eines Satzes von Verschlüsselungsressourcen zu verschlüsseln,
wobei der Verschlüsselungssegment-Identifikator konfiguriert ist, den Verschlüsselungsknoten als eine Quelle des verschlüsselten Verkehrsflusses zu identifizieren.

2. Vorrichtung nach Anspruch 1, wobei der Satz von Verschlüsselungsressourcen einen Verschlüsselungsalgorithmus, der zum Verschlüsseln des verschlüsselten Verkehrsflusses verwendet wird, und einen Verschlüsselungsschlüssel, der zum Verschlüsseln des verschlüsselten Verkehrsflusses verwendet wird, umfasst.

3. Vorrichtung nach Anspruch 1 oder 2, wobei der Verschlüsselungssegment-Identifikator oberhalb des Verschlüsselungs-Headers des Verschlüsselungsprotokolls angeordnet ist.

4. Vorrichtung nach einem der Ansprüche 1 bis 3, wobei der verschlüsselte Verkehrsfluss ein verschlüsselter Dienst oder ein verschlüsselter Tunnel ist, der einen Satz von Diensten unterstützt.

5. Vorrichtung nach einem der Ansprüche 1 bis 4, wobei der verschlüsselte Verkehrsfluss ein Schicht-2,5-Fluss oder ein Schicht-3-Fluss ist.

6. Vorrichtung nach einem der Ansprüche 1 bis 5, wobei das Paket einen Transportsegment-Identifikator umfasst, der konfiguriert ist, einen Verschlüsselungsknoten, der den verschlüsselten Verkehrsfluss verschlüsselt, mit einem Entschlüsselungsknoten zu verbinden, der den verschlüsselten Verkehrsfluss entschlüsselt, wobei der Transportsegment-Identifikator oberhalb des Verschlüsselungssegment-Identifikators angeordnet ist.

7. Vorrichtung nach einem der Ansprüche 1 bis 6, wobei das Paket mindestens einen Kommunikations-Header umfasst, der oberhalb des Verschlüsselungssegment-Identifikators angeordnet ist.

8. Vorrichtung nach einem der Ansprüche 1 bis 6, wobei die Vorrichtung zum Unterstützen der Kommunikation des Pakets Mittel zum Durchführen von Folgendem umfasst:
Bestimmen, durch einen Verschlüsselungsknoten, dass das Paket zu dem verschlüsselten Verkehrsfluss gehört;
Identifizieren, durch den Verschlüsselungsknoten auf der Grundlage des Pakets, des Verschlüsselungssegments; und
Erzeugen, durch den Verschlüsselungsknoten auf der Grundlage des Verschlüsselungssegment-Identifikators, des Pakets.

9. Vorrichtung nach einem der Ansprüche 1 bis 7, wobei die Vorrichtung zum Unterstützen der Kommunikation des Pakets Mittel zum Durchführen von Folgendem umfasst:
Empfangen, durch einen Knoten, des Pakets, wobei das Paket mindestens einen Kommunikations-Header umfasst, der oberhalb des Verschlüsselungssegment-Identifikators angeordnet ist; und
Senden, durch den Knoten zu einem Zielknoten auf der Grundlage des mindestens einen Kommunikations-Headers, des Pakets.

10. Vorrichtung nach einem der Ansprüche 1 bis 7, wobei die Vorrichtung zum Unterstützen der Kommunikation des Pakets Mittel zum Durchführen von Folgendem umfasst:
Bestimmen, durch einen Entschlüsselungsknoten auf der Grundlage des Verschlüsselungssegment-Identifikators in dem Paket, dass das Paket zu entschlüsseln ist;
Entschlüsseln, durch den Entschlüsselungsknoten, des verschlüsselten Abschnitts des Pakets, um ein entschlüsseltes Paket zu bilden; und
Senden, durch den Entschlüsselungsknoten, des entschlüsselten Pakets.

11. Vorrichtung nach einem der Ansprüche 1 bis 10, wobei die Mittel umfassen: mindestens einen Prozessor; und
mindestens einen Speicher, der Anweisungen speichert, die, wenn sie von dem mindestens einen Prozessor ausgeführt werden, den Betrieb der Vorrichtung bewirken.

12. Computerlesbares Speichermedium, das Computerprogrammcode speichert, der konfiguriert ist, eine Vorrichtung zu veranlassen, mindestens Folgendes durchzuführen:
Unterstützen, innerhalb eines Netzwerks, einer Kommunikation eines Pakets eines verschlüsselten Verkehrsflusses, wobei das Paket eine Nutzlast umfasst, wobei ein verschlüsselter Abschnitt des Pakets auf der Grundlage eines Verschlüsselungsprotokolls verschlüsselt ist, wobei der verschlüsselte Abschnitt des Pakets die Nutzlast umfasst, wobei das Paket einen Verschlüsselungs-Header des Verschlüsselungsprotokolls oberhalb des verschlüsselten Abschnitts des Pakets umfasst, wobei das Paket einen Verschlüsselungssegment-Identifikator umfasst, der konfiguriert ist, den verschlüsselten Verkehrsfluss innerhalb des Netzwerks eindeutig zu identifizieren, wobei der Verschlüsselungssegment-Identifikator konfiguriert ist, ein Verschlüsselungssegment zu identifizieren, das konfiguriert ist, den verschlüsselten Verkehrsfluss auf der Grundlage eines Satzes von Verschlüsselungsressourcen zu verschlüsseln,
wobei der Verschlüsselungssegment-Identifikator konfiguriert ist, den Verschlüsselungsknoten als eine Quelle des verschlüsselten Verkehrsflusses zu identifizieren.

13. Verfahren, umfassend:
Unterstützen, innerhalb eines Netzwerks, einer Kommunikation eines Pakets eines verschlüsselten Verkehrsflusses,
wobei das Paket eine Nutzlast umfasst, wobei ein verschlüsselter Abschnitt des Pakets auf der Grundlage eines Verschlüsselungsprotokolls verschlüsselt ist, wobei der verschlüsselte Abschnitt des Pakets die Nutzlast umfasst, wobei das Paket einen Verschlüsselungs-Header des Verschlüsselungsprotokolls oberhalb des verschlüsselten Abschnitts des Pakets umfasst, wobei das Paket einen Verschlüsselungssegment-Identifikator umfasst,
der konfiguriert ist, den verschlüsselten Verkehrsfluss innerhalb des Netzwerks eindeutig zu identifizieren (610),
wobei der Verschlüsselungssegment-Identifikator konfiguriert ist, ein Verschlüsselungssegment zu identifizieren, das konfiguriert ist, den verschlüsselten Verkehrsfluss auf der Grundlage eines Satzes von Verschlüsselungsressourcen zu verschlüsseln,
wobei der Verschlüsselungssegment-Identifikator konfiguriert ist, den Verschlüsselungsknoten als eine Quelle des verschlüsselten Verkehrsflusses zu identifizieren.

## Revendications

1. Appareil comprenant des moyens pour effectuer :
la prise en charge, au sein d'un réseau, d'une communication d'un paquet d'un flux de trafic chiffré,
dans lequel le paquet comprend une charge utile, dans lequel une partie chiffrée du paquet est chiffrée sur la base d'un protocole de chiffrement, dans lequel la partie chiffrée du paquet comprend la charge utile, dans lequel le paquet comprend un en-tête de chiffrement du protocole de chiffrement au-dessus de la partie chiffrée du paquet, dans lequel le paquet comprend un identifiant de segment de chiffrement configuré pour identifier de manière unique le flux de trafic chiffré au sein du réseau,
dans lequel l'identifiant de segment de chiffrement est configuré pour identifier un segment de chiffrement configuré pour chiffrer le flux de trafic chiffré sur la base d'un ensemble de ressources de chiffrement,
dans lequel l'identifiant de segment de chiffrement est configuré pour identifier le nœud de chiffrement en tant que source du flux de trafic chiffré.

2. Appareil selon la revendication 1, dans lequel l'ensemble de ressources de chiffrement comprend un algorithme de chiffrement utilisé pour chiffrer le flux de trafic chiffré et une clé de chiffrement utilisée pour chiffrer le flux de trafic chiffré.

3. Appareil selon la revendication 1 ou 2, dans lequel l'identifiant de segment de chiffrement est disposé au-dessus de l'en-tête de chiffrement du protocole de chiffrement.

4. Appareil selon l'une quelconque des revendications 1 à 3, dans lequel le flux de trafic chiffré est un service chiffré ou un tunnel chiffré prenant en charge un ensemble de services.

5. Appareil selon l'une quelconque des revendications 1 à 4, dans lequel le flux de trafic chiffré est un flux de couche 2,5 ou un flux de couche 3.

6. Appareil selon l'une quelconque des revendications 1 à 5, dans lequel le paquet comprend un identifiant de segment de transport configuré pour connecter un nœud de chiffrement qui chiffre le flux de trafic chiffré à un nœud de déchiffrement qui déchiffre le flux de trafic chiffré, dans lequel l'identifiant de segment de transport est disposé au-dessus de l'identifiant de segment de chiffrement.

7. Appareil selon l'une quelconque des revendications 1 à 6, dans lequel le paquet comprend au moins un en-tête de communication disposé au-dessus de l'identifiant de segment de chiffrement.

8. Appareil selon l'une quelconque des revendications 1 à 6, dans lequel, pour prendre en charge la communication du paquet, l'appareil comprend des moyens pour effectuer :
la détermination, par un nœud de chiffrement, que le paquet appartient au flux de trafic chiffré ;
l'identification, par le nœud de chiffrement sur la base du paquet, du segment de chiffrement ; et
la génération, par le nœud de chiffrement sur la base de l'identifiant de segment de chiffrement, du paquet.

9. Appareil selon l'une quelconque des revendications 1 à 7, dans lequel, pour prendre en charge la communication du paquet, l'appareil comprend des moyens pour effectuer :
la réception, par un nœud, du paquet, dans lequel le paquet comprend au moins un en-tête de communication disposé au-dessus de l'identifiant de segment de chiffrement ; et
l'envoi, par le nœud vers un nœud de destination sur la base dudit au moins un en-tête de communication, du paquet.

10. Appareil selon l'une quelconque des revendications 1 à 7, dans lequel, pour prendre en charge la communication du paquet, l'appareil comprend des moyens pour effectuer :
la détermination, par un nœud de déchiffrement sur la base de l'identifiant de segment de chiffrement dans le paquet, que le paquet doit être déchiffré ;
le déchiffrement, par le nœud de déchiffrement, de la partie chiffrée du paquet pour former un paquet déchiffré ; et
l'envoi, par le nœud de déchiffrement, du paquet déchiffré.

11. Appareil selon l'une quelconque des revendications 1 à 10, dans lequel les moyens comprennent : au moins un processeur ; et
au moins une mémoire stockant des instructions qui, lorsqu'elles sont exécutées par ledit au moins un processeur, provoquent le fonctionnement de l'appareil.

12. Support de stockage lisible par ordinateur stockant un code de programme informatique configuré pour amener un appareil à effectuer au moins :
la prise en charge, au sein d'un réseau, d'une communication d'un paquet d'un flux de trafic chiffré,
dans lequel le paquet comprend une charge utile, dans lequel une partie chiffrée du paquet est chiffrée sur la base d'un protocole de chiffrement, dans lequel la partie chiffrée du paquet comprend la charge utile, dans lequel le paquet comprend un en-tête de chiffrement du protocole de chiffrement au-dessus de la partie chiffrée du paquet, dans lequel le paquet comprend un identifiant de segment de chiffrement configuré pour identifier de manière unique le flux de trafic chiffré au sein du réseau, dans lequel l'identifiant de segment de chiffrement est configuré pour identifier un segment de chiffrement configuré pour chiffrer le flux de trafic chiffré sur la base d'un ensemble de ressources de chiffrement,
dans lequel l'identifiant de segment de chiffrement est configuré pour identifier le nœud de chiffrement en tant que source du flux de trafic chiffré.

13. Procédé, comprenant :
la prise en charge, au sein d'un réseau, d'une communication d'un paquet d'un flux de trafic chiffré,
dans lequel le paquet comprend une charge utile, dans lequel une partie chiffrée du paquet est chiffrée sur la base d'un protocole de chiffrement, dans lequel la partie chiffrée du paquet comprend la charge utile, dans lequel le paquet comprend un en-tête de chiffrement du protocole de chiffrement au-dessus de la partie chiffrée du paquet, dans lequel le paquet comprend un identifiant de segment de chiffrement
configuré pour identifier de manière unique le flux de trafic chiffré au sein du réseau (610),
dans lequel l'identifiant de segment de chiffrement est configuré pour identifier un segment de chiffrement configuré pour chiffrer le flux de trafic chiffré sur la base d'un ensemble de ressources de chiffrement,
dans lequel l'identifiant de segment de chiffrement est configuré pour identifier le nœud de chiffrement en tant que source du flux de trafic chiffré.
